(19) Europäisches Patentamt / European Patent Office / Office européen des brevets

(11) **EP 4 746 060 A1**

(12) **EUROPEAN PATENT APPLICATION**

(43) Date of publication:
**20.05.2026 Bulletin 2026/21**

(21) Application number: **25215273.1**

(22) Date of filing: **12.11.2025**

(51) International Patent Classification (IPC):
*H01M 4/13* (2010.01)    *H01M 4/139* (2010.01)
*H01M 4/74* (2006.01)    *H01M 10/052* (2010.01)
*H01M 50/293* (2021.01)    *H01M 50/414* (2021.01)
*H01M 4/80* (2006.01)

(52) Cooperative Patent Classification (CPC):
H01M 4/80; H01M 4/13; H01M 4/139; H01M 4/742;
H01M 10/052; H01M 50/293; H01M 50/414

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.11.2024 KR 20240162306**

(71) Applicant: **SAMSUNG SDI CO., LTD.
Yongin-si, Gyeonggi-do 17084 (KR)**

(72) Inventors:
• **LEE, Hyunye**
  **17084 Yongin-si (KR)**
• **OH, Seryong**
  **17084 Yongin-si (KR)**

(74) Representative: **Maiwald GmbH
Elisenhof
Elisenstraße 3
80335 München (DE)**

(54) **ELECTRODE COMPOSITE, METHOD FOR MANUFACTURING THE SAME, AND RECHARGEABLE LITHIUM BATTERY INCLUDING THE SAME**

(57)    Provided is an electrode composite that may include a current collector including a high-porous region and a low-porous region, and an electrode tab electrically connected to the high-porous region. The high-porous region may be adjacent to the low-porous region in the first direction. The electrode tab may be adjacent to the high-porous region in the first direction. The current collector may have a first length in the first direction. A height of the high-porous region in the first direction may be in a range of about 30% to about 50% of the first length. The low-porous region may be a remaining region other than the high-porous region in the current collector. A porosity of the high-porous region may be greater than a porosity of the low-porous region.

FIG. 6

**Description**

BACKGROUND

The present disclosure herein relates to an electrode composite, a method for manufacturing the electrode composite, and a rechargeable lithium battery including the electrode composite.

The increasing presence of battery-powered electronics, such as, e.g., mobile phones, laptop computers, electric vehicles, and the like, has driven a sharp rise in demand for rechargeable batteries with high energy density and high capacity. Accordingly, improving the performance of rechargeable lithium secondary batteries may be advantageous.

Rechargeable lithium batteries include a positive electrode and a negative electrode, each including an active material that allows intercalation and deintercalation of lithium ions, and an electrolyte, and produce electrical energy from redox reactions that take place as lithium ions are intercalated into or deintercalated from the positive electrode and the negative electrode.

Rechargeable lithium batteries operate on the principle that current is collected in the current collector and flows through the electrode tab. As a result, the current density concentrates near the electrode tab within the current collector. This concentration increases electrical resistance and makes it easy for heat to accumulate near the electrode tab, which may cause a decrease in the performance of the rechargeable lithium battery.

SUMMARY

The present disclosure describes an electrode composite optimized or improved for ionic conductivity and mechanical stability according to current density distribution.

The present disclosure also describes a rechargeable lithium battery including the composite electrode and having a bipolar structure to thereby be optimized or improved for ionic conductivity and mechanical stability.

An example embodiment of the present disclosure includes an electrode composite including a current collector that includes a high-porous region and a low-porous region, and an electrode tab electrically connected to the high-porous region.

In an example embodiment, the high-porous region may be adjacent to the low-porous region in a first direction. The electrode tab may be adjacent to the high-porous region in the first direction. The current collector may have a first length in the first direction. A height of the high-porous region in the first direction may be in a range of about 30% to about 50% of the first length. The low-porous region may be a remaining region other than the high-porous region in the current collector. A porosity of the high-porous region may be greater than a porosity of the low-porous region.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:

FIG. 1 is a simplified conceptual view illustrating a rechargeable lithium battery according to example embodiments of the present disclosure;

FIGS. 2 to 5 are each a schematic view illustrating a rechargeable lithium battery according to an example embodiment, FIG. 2 shows a cylindrical battery, FIG. 3 shows a prismatic battery, and FIGS. 4 and 5 show pouch-type batteries;

FIGS. 6 to 8 are each a schematic view illustrating an electrode composite according to an example embodiment of the present disclosure;

FIG. 9 is a cross-sectional view taken along line A-A' in FIG. 6;

FIG. 10 is a cross-sectional view taken along line B-B' in FIG. 6;

FIG. 11 is a schematic diagram showing a current density distribution within an electrode composite with a single electrode tab;

FIG. 12A and FIG. 12B show measurement results of a current density distribution and a temperature distribution of the electrode composite in FIG. 11.

FIG. 13A to FIG. 13D show measurement results of a current density distribution and a temperature distribution of an electrode composite having two electrode tabs;

FIG. 14 is a schematic view illustrating an electrode composite according to an example embodiment of the present disclosure;

FIG. 15 and FIG. 16 are each a schematic view illustrating a rechargeable lithium battery according to an example embodiment of the present disclosure;

FIG. 17 is a schematic view illustrating a general rechargeable lithium battery that is not bipolar;

FIG. 18 and FIG. 19 illustrate examples in which a high-porous region and an electrode tab are electrically connected;

FIG. 20 and FIG. 21 are each a view for describing a method of measuring a porosity; and

FIG. 22 is experimental data showing a temperature distribution during battery operation.

FIG. 23 is a flow chart illustrating a method of producing an electrode composite, according to various example embodiments.

DETAILED DESCRIPTION

In order to fully understand the configuration and effect of the present disclosure, example embodiments of the present disclosure are described below in more detail with reference to the accompanying drawings. The present disclosure may, however, be embodied in various forms and should not be construed as limited to the example embodiments set forth herein, and various changes and modifications can be made. Rather, these example embodiments are provided so that this disclosure is thorough and complete, and fully conveys the scope of the present disclosure to those skilled in the art to which the present disclosure pertains.

In this specification, it is understood that, when an element is referred to as being "on" another element, the element may be "directly on" the other element, or intervening elements may be present therebetween. In the drawings, thicknesses of components may be exaggerated for effectively explaining the technical contents thereof. Like reference numerals or symbols refer to like elements throughout the specification.

The singular forms are intended to include the plural forms as well, unless the context clearly indicates otherwise. In addition, unless otherwise specially noted, the phrase "A or B" may indicate "including A but not B, B but not A, or A and B." The terms "comprises/includes" and/or "comprising/including" used in this description do not exclude the presence or addition of one or more other components.

In this specification, "combination thereof" may refer to a mixture, a stack, a composite, a copolymer, an alloy, a blend, and a reaction product of components.

Unless otherwise defined in this specification, a particle diameter may be an average particle diameter. Also, the particle diameter indicates an average particle diameter (D50) which refers to a diameter of particles at a cumulative volume of about 50 vol% in a particle size distribution. The average particle diameter (D50) may be measured by a method widely known to those skilled in the art, for example, may be measured by a particle size analyzer, or may also be measured using, e.g., a transmission electron microscope (TEM) image or a scanning electron microscope (SEM) image. Alternatively, the average particle diameter is measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, for example, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter (D50) based on about 50% of particle size distribution in the measurement instrument may then be calculated.

In this specification, unless defined otherwise, "substitution" indicates that at least one hydrogen of a substituent or a compound is substituted with deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In particular, "substitution" may indicate that at least one hydrogen of a substituent or a compound is substituted with deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, "substitution" may indicate that at least one hydrogen of a substituent or a compound is substituted with deuterium, a halogen group, a C1 to C20 alkyl group, a C6 to C30 aryl group, a C1 to C10 fluoroalkyl group, or a cyano group. Alternatively, "substitution" may indicate that at least one hydrogen of a substituent or a compound is substituted with deuterium, a halogen group, a C1 to C5 alkyl group, a C6 to C18 aryl group, a C1 to C5 fluoroalkyl group, or a cyano group. For example, "substitution" may indicate that at least one hydrogen of a substituent or a compound is substituted with deuterium, a cyano group, a halogen group, a methyl group, an ethyl group, a propyl group, a butyl group, a phenyl group, a biphenyl group, a terphenyl group, a trifluoromethyl group, or a naphthyl group.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

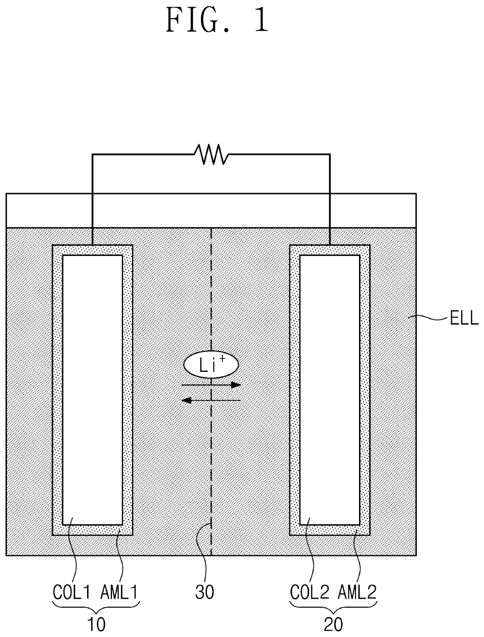

FIG. 1 is a simplified conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte ELL.

The positive electrode 10 and the negative electrode 20 may be spaced apart from each other with the separator 30 therebetween. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium for transferring lithium ions between the positive electrode 10 and the negative electrode 20. In the electrolyte ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and may further include a binder and/or a conductive material (e.g., an electrically conductive material).

An amount of the positive electrode active material in the positive electrode active material layer AML1 may be in a range of about 90 wt% to about 99.5 wt% based on 100 wt% of the positive electrode active material layer AML1. An amount of each of the binder and the conductive material may be in a range of about 0.5 wt% to about 5 wt% based on 100 wt% of the positive electrode active material layer AML1.

The binder is configured to attach the positive electrode active material particles to each other, and to attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery), and that conducts electrons, may be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector COL1, but the material of the current collector COL1 is not limited thereto.

### Positive Electrode Active Material

The positive electrode active material in the positive electrode active material layer AML1 may include a compound (lithiated intercalation compound) that is capable of reversibly intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following chemical formulas may be used. $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$ ($0.90 \le a \le 1.8$).

In the above formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L1 is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and can be applicable to a high-capacity, high-density rechargeable lithium battery.

## Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may attach the negative electrode active material particles to each other, and attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery), and that conducts electrons, may be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

## Negative Electrode Active **Material**

The negative electrode active material in the negative electrode active material layer AML2 may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon applied onto the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

## Separator **30**

Depending on the type of the rechargeable lithium battery, the separator 30 may be between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof, on one surface, or on both surfaces, of the porous substrate.

The porous substrate may be or include a polymer film formed of or include any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

## **Electrolyte ELL**

The electrolyte ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, propyl propionate (PP), and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio of about 1:1 to about 1:9.The lithium salt dissolved in the organic solvent is configured to supply lithium ions in a battery, to enable an operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato) borate(LiDFOB), lithium difluorobis(oxalato)phosphate (LiDFBOP), and lithium bis(oxalato) borate (LiBOB).

## Rechargeable Lithium Battery

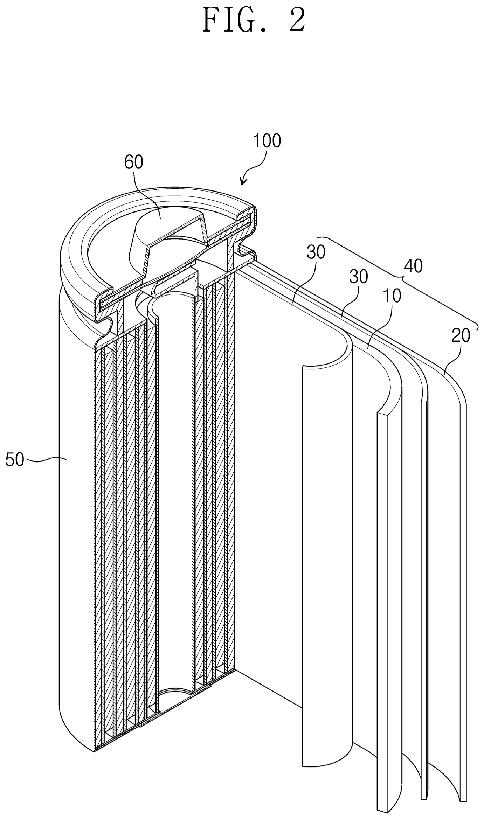

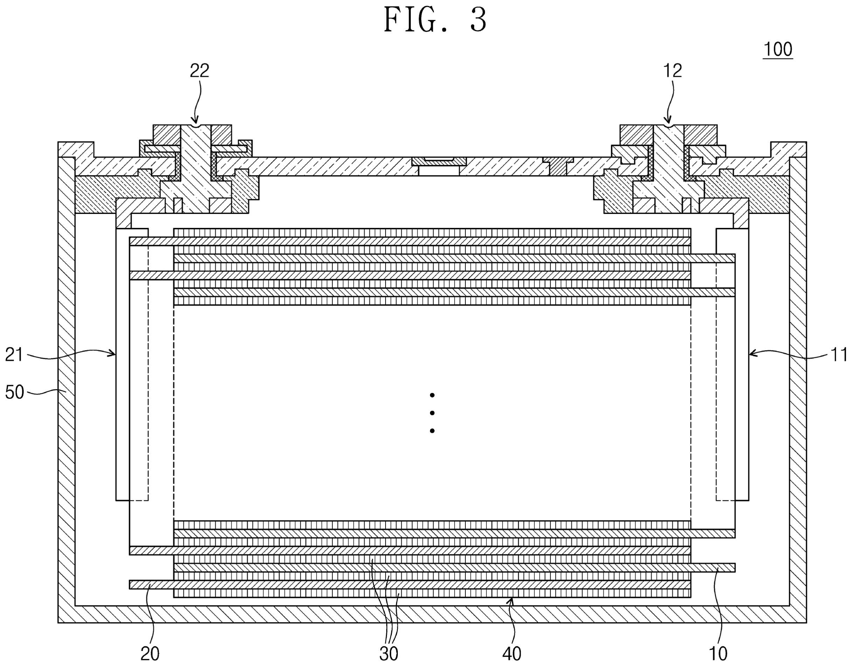

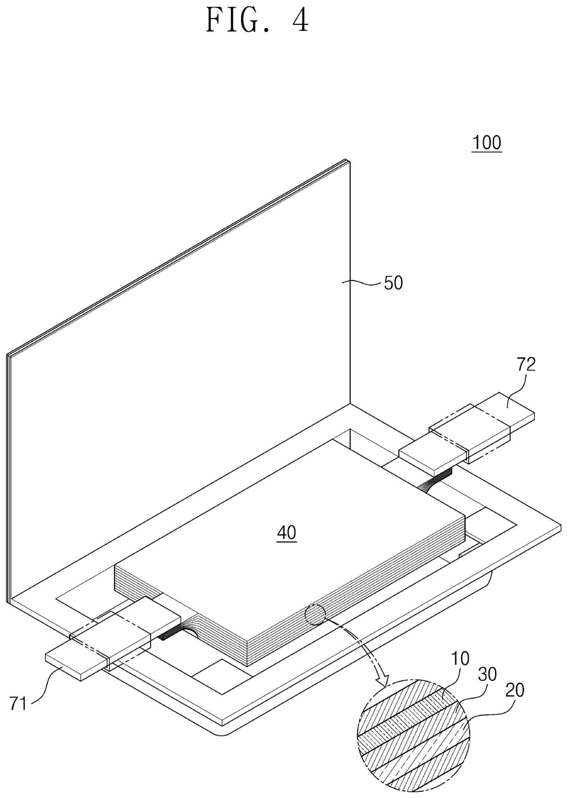

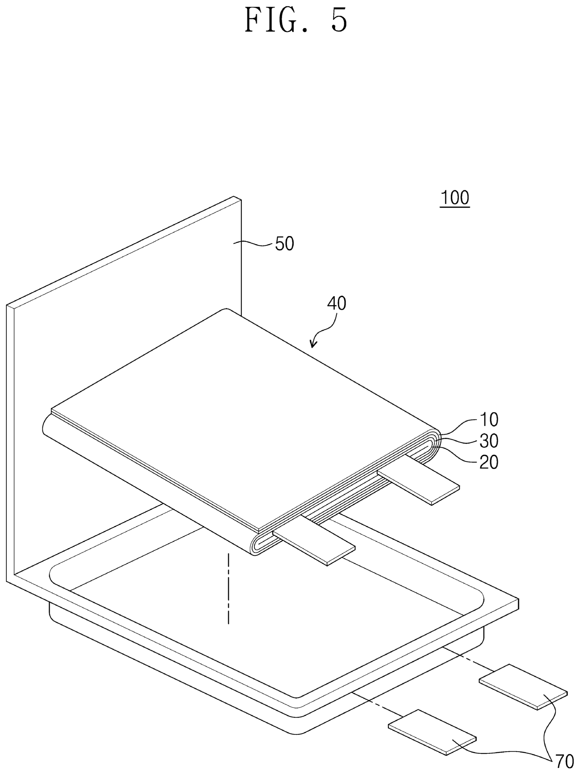

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, example embodiments according to the present disclosure are described in more detail. The detailed descriptions of the duplicated technical features as the rechargeable lithium battery explained above with reference to FIG. 1 to FIG. 5 are omitted, and a difference therewith is described in detail.

## Electrode Composite (CPX)

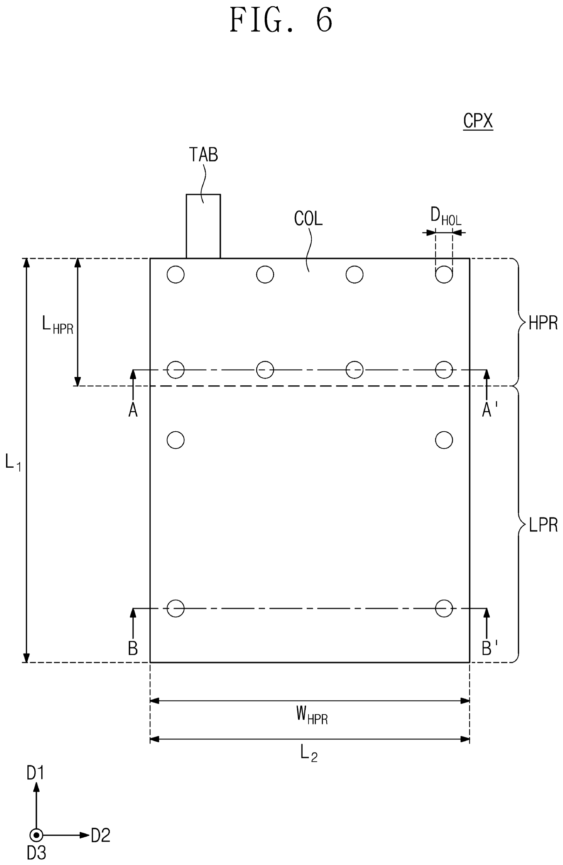

Hereinafter, an electrode composite CPX according to an example embodiment of the present disclosure is described in detail with reference to FIG. 6 to FIG. 10, and FIG. 20 to FIG. 21.

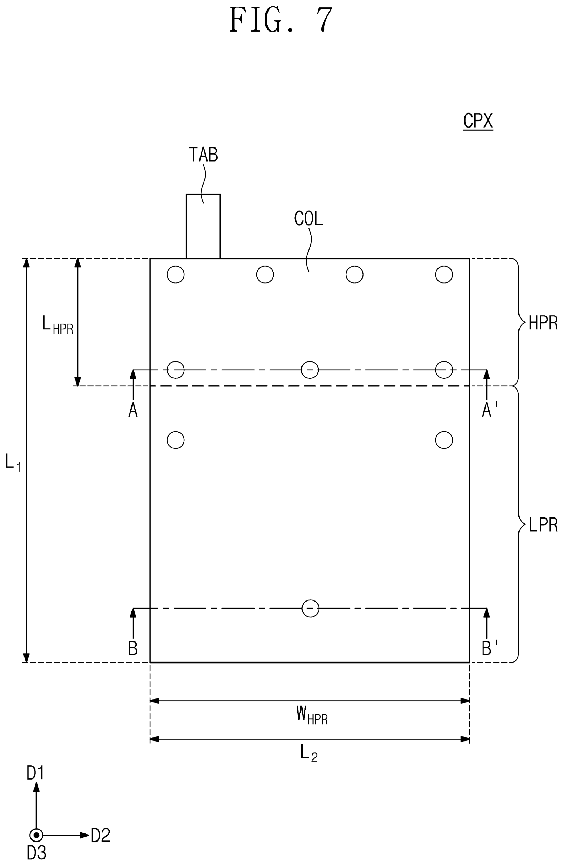

FIG. 6 and FIG. 7 are schematic views illustrating an electrode composite according to an example embodiment of the present disclosure. Referring to FIG. 6 and FIG. 7, an electrode composite CPX according to an example embodiment of the present disclosure may include a current collector COL and an electrode tab TAB. The current collector COL may include a high-porous region HPR and a low-porous region LPR. The electrode tab TAB may be adjacent to the high-porous region HPR in a first direction (D1 direction). The high-porous region HPR may be adjacent to the low-porous region LPR in the first direction (D1 direction).

The current collector COL may have a first length $L_1$ in the first direction (D1 direction). A height $L_{HPR}$ of the high-porous region HPR in the first direction (D1 direction) may be in a range of about 30% to about 50% of the first length $L_1$. The low-porous region LPR may be a remaining region other than the high-porous region HPR in the current collector COL. For example, as illustrated in FIG. 6, the height $L_{HPR}$ of the high-porous region HPR in the first direction (D1 direction) may be about 40% of the first length $L_1$, and a height of the low-porous region $L_{HPR}$ in the first direction (D1 direction) may be about 60% of the first length $L_1$.

The current collector COL may have a second length $L_2$ in a second direction (D2 direction). A width $W_{HPR}$ of the high-porous region HPR in the second direction (D2 direction) may be in a range of about 30% to about 100%, about 40% to about 100%, or about 50% to about 100%, with respect to the second length $L_2$.

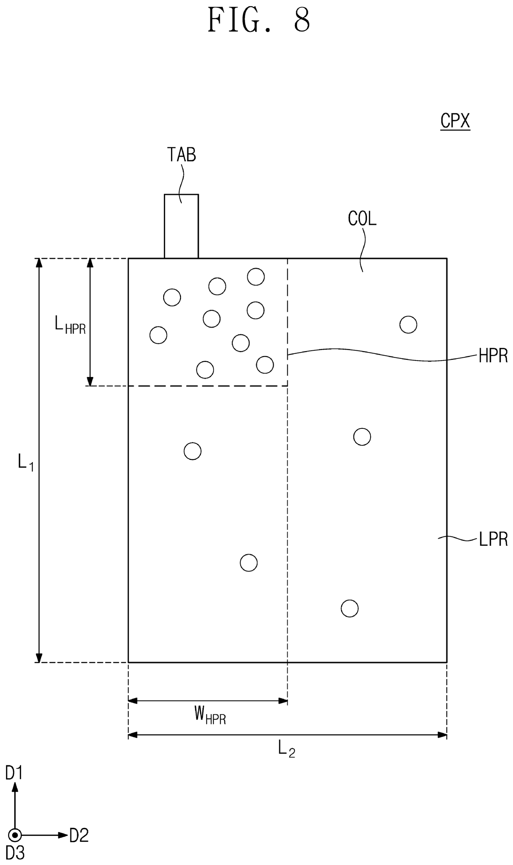

The high-porous region HPR may be a part of the current collector COL in a substantially hexahedron shape. For example, as illustrated in FIG. 6 and FIG. 7, when viewed in a plane, the high-porous region HPR may be a substantially rectangular shaped region. For example, the low-porous region LPR may have a hexahedron shape or may not have a hexahedron shape. That is, the low-porous region LPR may have a rectangular shape when viewed in the plane, as illustrated in FIG. 6, but may have a polygonal shape when viewed in the plane as illustrated in FIG. 8.

The high-porous region HPR may include a pore. The high-porous region HPR may have an average pore diameter in a range of about 1 $\mu$m to about 300 $\mu$m, about 100 $\mu$m to about 300 $\mu$m, or about 200 $\mu$m to about 300 $\mu$m.

The average pore diameter of the high-porous region HPR may be measured by preparing a planar image of the current collector COL as illustrated in FIG. 6 and FIG. 7, and may be a calculated average value of measured diameters

($D_{HOL}$) of five random pores in the plan view above. The diameter ($D_{HOL}$) of each pore may be defined as a diameter of minimum bounding circle of each pore.

The low-porous region LPR may include a plurality of pores, or may include no pore. The average pore diameter of the low-porous region LPR may be in a range of about 1 $\mu$m to about 300 $\mu$m, about 100 $\mu$m to about 300 $\mu$m, or about 200 $\mu$m to about 300 $\mu$m. The average pore diameter of the low-porous region LPR may be measured by, e.g., preparing a planar image of the current collector COL as illustrated in FIG. 6 and FIG. 7, and may be a calculated average value of measured diameters ($D_{HOL}$) of five random pores within the low-porous region LPR in the plan view above. The diameter of each pore may be defined as a diameter of minimum bounding circle of each pore. When the low-porous region LPR includes no pore, the average pore diameter ($D_{HOL}$) of the low-porous region LPR may be equal to 0.

The high-porous region HPR may have a porosity in a range of about 20% or more, and about 40% or less. The low-porous region LPR may have a porosity in a range of about 0% or more, and less than about 20%.

The porosity of the high-porous region HPR may be the ratio of the 'area of pore/area of high-porous region HPR.' The porosity of the low-porous region LPR may be the ratio of the 'area of pore/area of low-porous region LPR.' The area of the pore, the area of the high-porous region HPR, the area of the low-porous region LPR may be measured based on a planar image of the current collector COL as illustrated in FIG. 6 and FIG. 7.

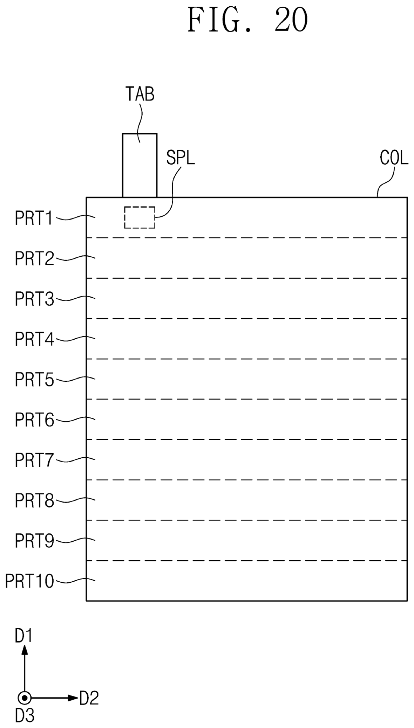

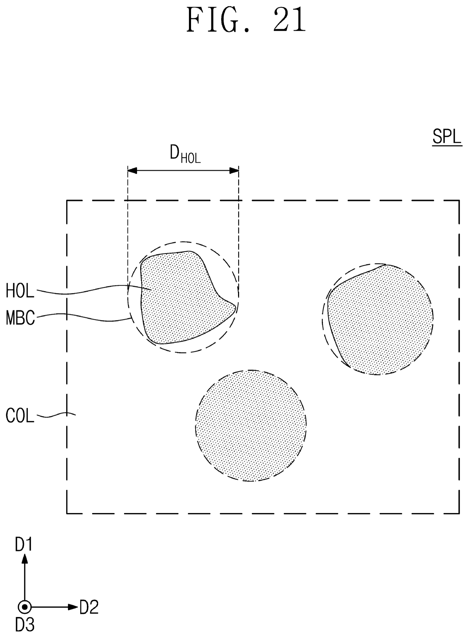

A method of measuring a porosity is described with reference to FIG. 20 and FIG. 21. FIG. 20 is a schematic view of the electrode composite CPX according to an example embodiment of the present disclosure. In the view, pores are omitted. As illustrated in FIG. 20, a planar image of the current collector COL may be prepared. The current collector COL in the plan view may be substantially equally divided into first to tenth regions PRT1 to PRT10 in the first direction (D1 direction). As an instrument for observing a plane, any instrument that observes a plane may be used, as long as the instrument may distinguish between a pore and a non-pore. For example, various image analysis instruments such as, e.g., scanning electron microscopy (SEM), transmission electron microscopy (TEM), optical microscopy, X-ray computed tomography (CT), laser scanning confocal microscopy, ultrasound imaging devices may be used.

A sample region SPL is set within each region, and a porosity of the sample region SPL may be defined as a porosity of the corresponding region. The dimensions of the sample region SPL are substantially the same in all regions, and the position of the second direction (D2 direction) may be similar to the position of the electrode tab TAB. For example, for each region, a square sample region SPL in a size of about 1 cm * 1 cm may be selected.

FIG. 21 is an enlarged schematic view of the sample region SPL in FIG. 20. The porosity of the sample region SPL may be calculated according to Equation 1 below.

Equation 1:

$$\text{Porosity of sample region (\%) = Area of pore / Area of sample region}$$

In an example embodiment, an area of pore may be calculated by image processing a two-dimensional image of the sample region SPL and analyzing the same. The 2-dimensional image of the sample region SPL may be an image obtained using, e.g., the above-described image analysis instruments.

For example, the two-dimensional image of the sample region SPL may be image processed using an Image J tool. A void region in the processed image is analyzed to calculate a total area of pores. Using the function 'thresholding' of the Image J tool, only the area occupied by pores may be selected for analysis. According to this, the area of pore in Equation 1 may be calculated. In addition, the number of pores, an average diameter of the pores within the sample region SPL may be calculated.

An average diameter of pores may be an average value by measuring diameters ($D_{HOL}$) of any three pores. The diameters of the pores ($D_{HOL}$) may be defined as the diameter of the minimum bounding circle (MBC) of the pore HOL. The minimum bounding circle (MBC) of the pore HOL may completely include the pore, and may be defined as a circle having a shortest diameter on the basis of an outermost edge of the pore.

In the first to tenth regions PRT1 to PRT10, the porosity of each sample region SPL may be determined by measuring the porosity of the first to tenth regions PRT1 to PRT10.

In the first to tenth regions, the region having the porosity in a range of about 20% or greater and less than about 100% may be included in the high-porous region HPR, and the region having the porosity in a range of about 0% or greater and less than about 20% may be included in the low-porous region LPR. The porosity of the high-porous region HPR may be an average porosity of each region included in the high-porous region HPR. The porosity of the low-porous region LPR may be an average porosity of each region included in the low-porous region LPR.

During battery operation, the high-porosity regions HPR have a higher current density than low-porosity regions LPR, and increases ionic conductivity through the high porosity, and thus resistance of the battery may be reduced. When the porosity of the high-porous region HPR is greater than about 40%, mechanical strength is degraded, and thus there may be a risk of breakage to the current collector COL. The low-porous region LPR may provide mechanical stability of the electrode collector COL through the low porosity.

A difference in the porosity between the high-porous region HPR and the low-porous region LPR may be achieved by adjusting the average diameter and/or the number of pores. In an example embodiment, the average pore diameter of the high-porous region HPR may be greater than the average pore diameter of the low-porous region LPR. In another example embodiment, the number of pores per a unit area of the high-porous region HPR may be greater than the number of pores per a unit area of the low-porous region LPR.

From the first region PRT1 to the tenth region PRT10, the porosity of each region may decrease. The decrease in porosity may be discontinuous, i.e., a stepped decrease. Alternatively, the decrease in porosity may be continuous, i.e., a gradual decrease.

In an example embodiment of the discontinuously decreasing porosity, the electrode composite may be manufactured such that the porosity changes only at the boundary between the high-porous region HPR and the low-porous region LPR. For example, in FIG. 20, the porosities of the first to tenth regions PRT1 to PRT10 may be respectively equal to about 30%, about 30%, about 30%, about 30%, about 10%, about 10%, about 10%, about 10%, about 10%, and about 10%. In this case, the first region PRT1 to the fourth region PRT4 may be included in the high-porous region HPR, and the high-porous region HPR may have a porosity of about 30%. The low-porous region LPR may have a porosity of about 10%.

In an example embodiment of the continuously decreasing porosity, a case where the porosity continuously decreases is exemplified. For example, in FIG. 20, the porosities of the first to the tenth regions PRT1 to PRT10 may be respectively equal to about 40%, about 34%, about 28%, about 22%, about 16%, about 10%, about 4%, about 0%, about 0%, and about 0%. In this case, the first to the fourth regions PRT1 to PRT4 may be included in the high-porous region HPR, the porosity of the high-porous region HPR may be equal to about 31%, and the porosity of the low-porous region LPR may be equal to about 5%.

Within the current collector COL, how the porosity decreases may be selected depending on design requirements of the current collector COL. When continuously decreasing, the porosity may be finely adjusted according to the current density, thereby improving or maximizing the battery performance. When the porosity discontinuously decreases, production efficiency may increase, thereby making maintenance easier.

FIG. 8 is a schematic view illustrating an electrode composite according to an example embodiment of the present disclosure. Referring to FIG. 8, a width $W_{HPR}$ of the high-porous region HPR in the second direction (D2 direction) may be variously adjusted to manufacture the electrode composite according to an example embodiment of the present disclosure. As illustrated in FIG. 8, by intensively disposing the high-porous region HPR having high porosity near the electrode tab TAB, ionic conductivity and resistance of the electrode depending on a current density distribution may be more finely adjusted.

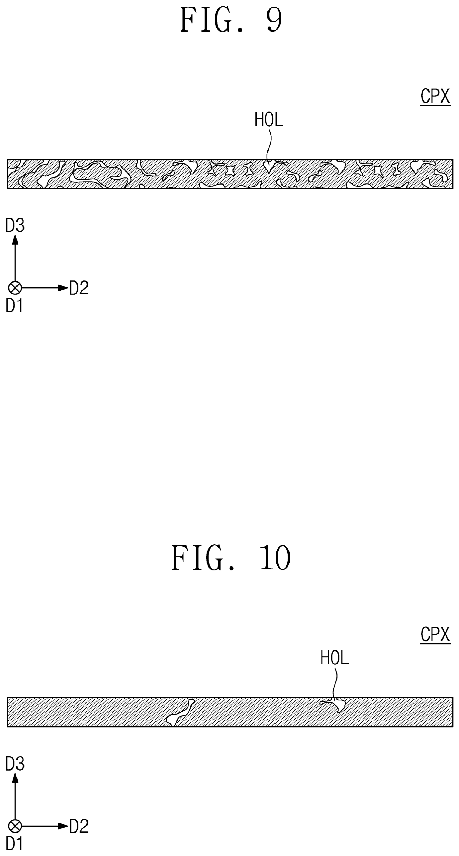

FIG. 9 is a cross-section of a portion taken along line A-A' in FIG. 6, and may be a cross-section of the high-porous region HPR. FIG. 10 is a cross-section of a portion taken along line B-B' in FIG. 6, and may be a cross-section of the low-porous region HPR. Referring to FIG. 9 and FIG. 10, a sum of areas of pores HOL within the cross-sectional view of the high-porous region HPR may be greater than a sum of areas of pores HOL within the cross-sectional view of the low-porous region LPR. That is, the high-porous region HPR may have more empty space than the low-porous region LPR.

The current collector COL according to an example embodiment of the present disclosure may include at least one of copper, a copper alloy, aluminum, or an aluminum alloy, or a combination thereof.

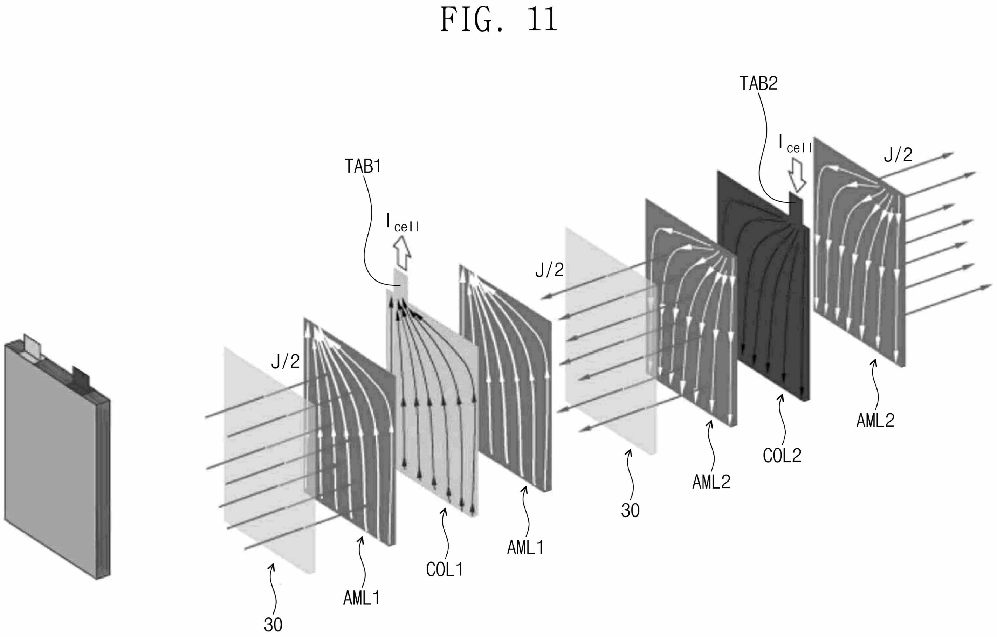

Hereinafter, a current density distribution within the electrode composite is described with reference to FIGS. 11 to 14.

FIG. 11 is a schematic view illustrating a current density distribution within an electrode composite with a single electrode tap. The current collectors COL1 and COL2 in FIG. 11 are general current collectors COL1 and COL2, which include no pore. Referring to FIG. 11, it can be confirmed that the current density is high near the electrode tabs TAB1 and TAB2.

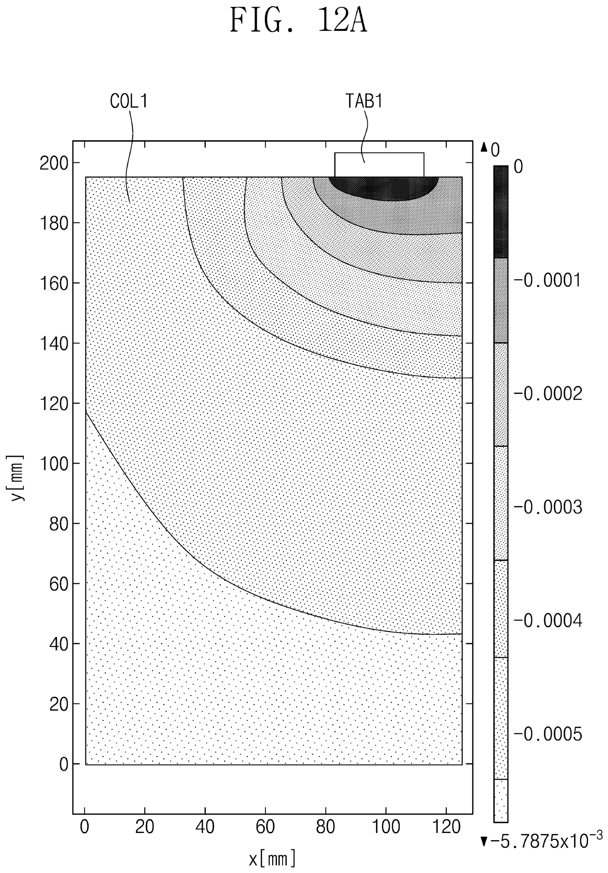

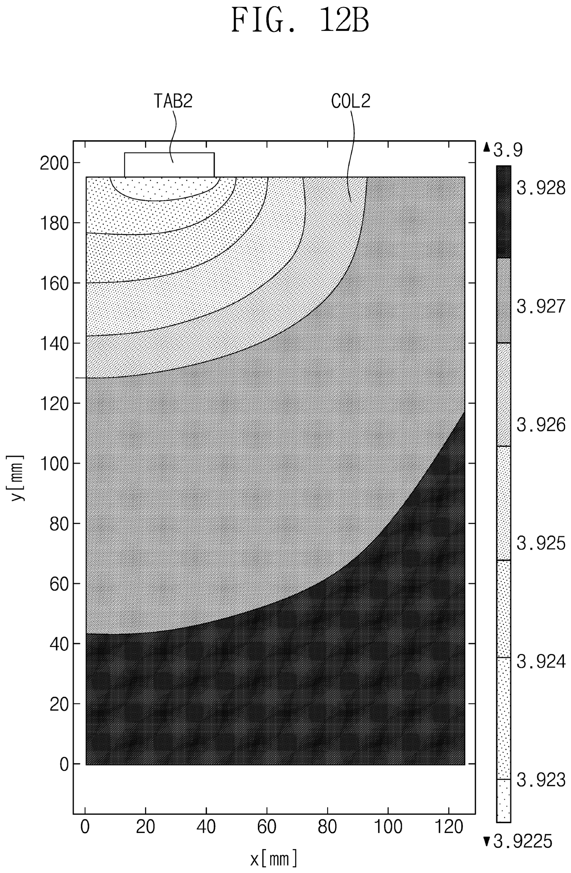

FIG. 12A and FIG. 12B are views respectively showing the measured current density distribution and temperature distribution of the electrode composite in FIG. 11. Referring to FIG. 12A and FIG. 12B, it can be confirmed that the current density and temperature are high near the electrode tabs TAB1 and TAB2. The current density distribution and the temperature distribution show similar tendencies, and thus the current density distribution may also be derived from the temperature distribution alone.

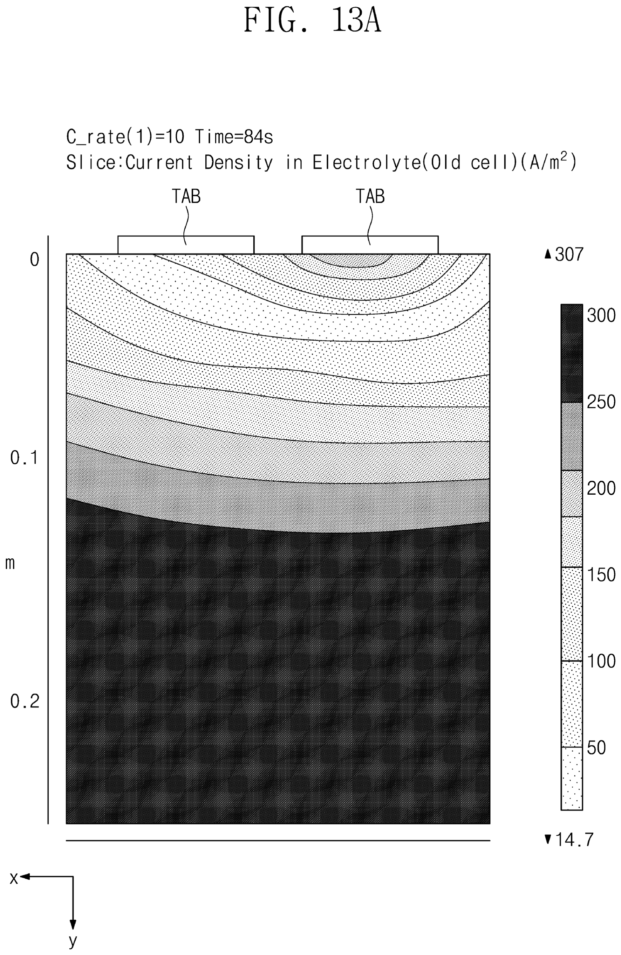

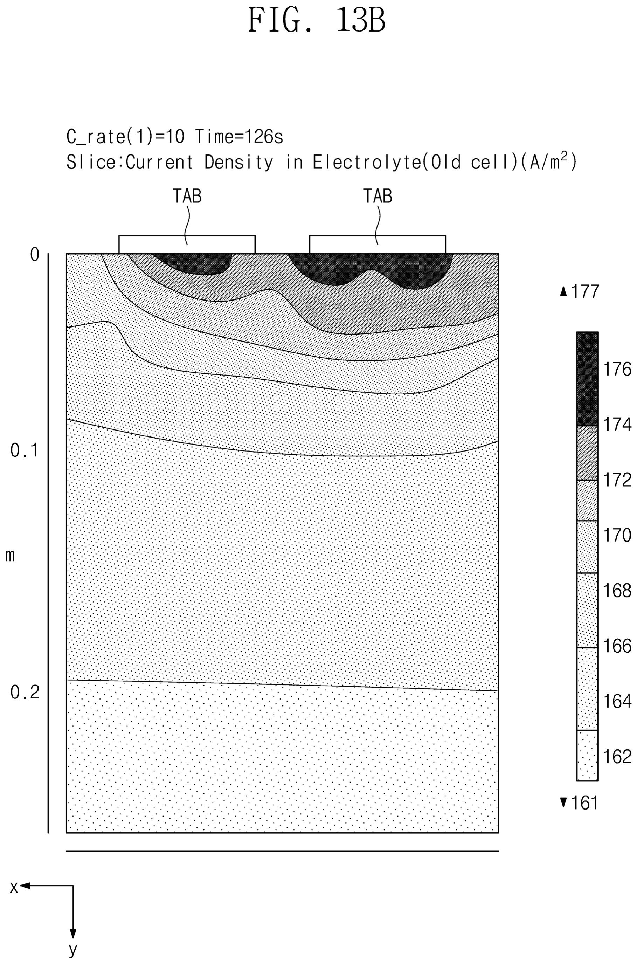

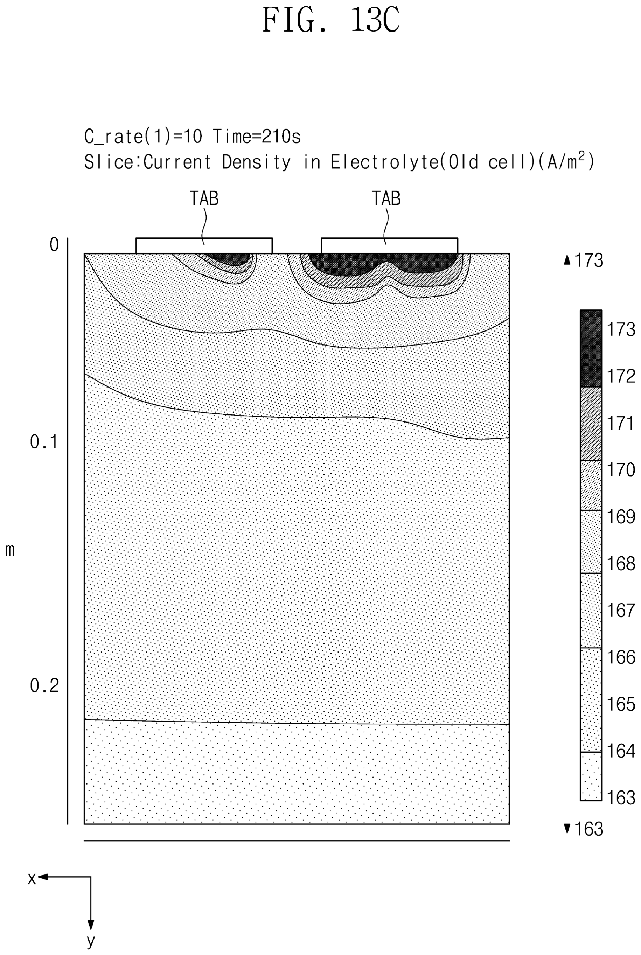

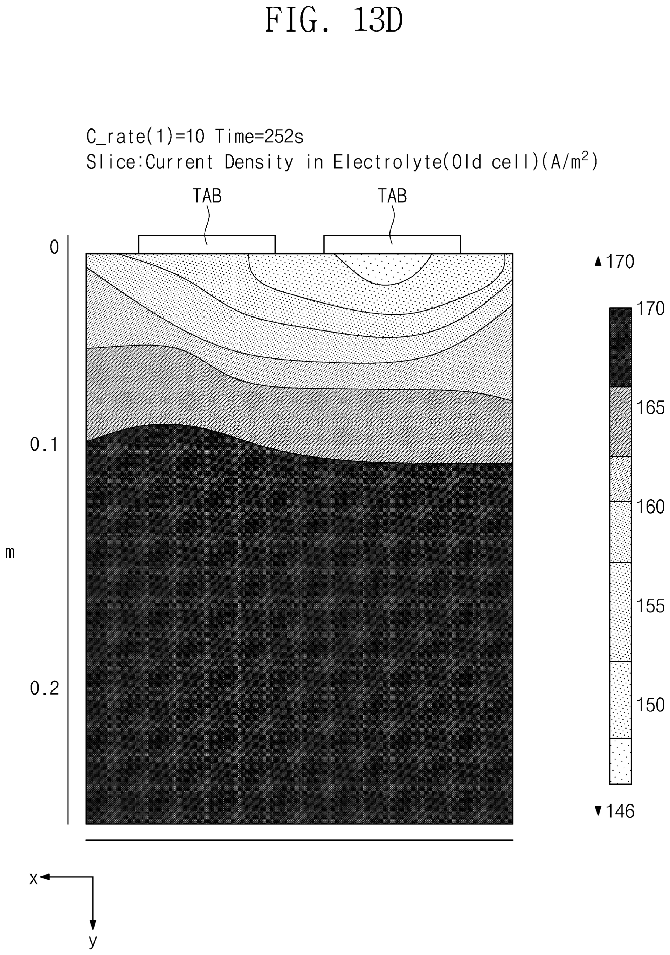

FIG. 13A to FIG. 13D show a temperature distribution measured over time for an electrode composite having two electrode tabs. The current collector COL in FIG. 13A to FIG. 13D is a general current collector that includes no pore. Referring to FIG. 13A to FIG. 13D, for dispersing the current density of the current collector COL, two electrode tabs TAB may be formed. However, even with two electrode tabs TAB, it is difficult to disperse the current density, and concentrated current near the electrode tab TAB can be still observed. In addition, it can be confirmed that portions with high current density are in a range of about 30% to about 50% of a region from the top of the current collector COL in the first direction (D1 direction).

When the temperature rises, deterioration inside the battery may accelerate, which is a main factor causing a shortening of the battery lifespan and a decrease in safety. When the current is concentrated near the electrode tab TAB and the temperature rises, degradation may accelerate in the region, leading to localized performance deterioration of the battery. In order to mitigate the above shortcomings, the current collector COL may be porous in accordance with the current density distribution. By increasing the porosity near the electrode tab TAB, local ionic conductivity may be improved, alleviating temperature rise and making the thermal distribution within the battery more uniform. Accordingly, the degradation rate of the battery may slow down, and performance deterioration may be reduced or prevented.

For example, as confirmed through FIG. 13A to FIG. 13D, depending on the current density distribution, about 30% to about 50% of regions from the top of the current collector COL in the first direction (D1 direction) may be manufactured as the high-porous region HPR, the remaining part with low temperature may be manufactured as the low-porous region LPR.

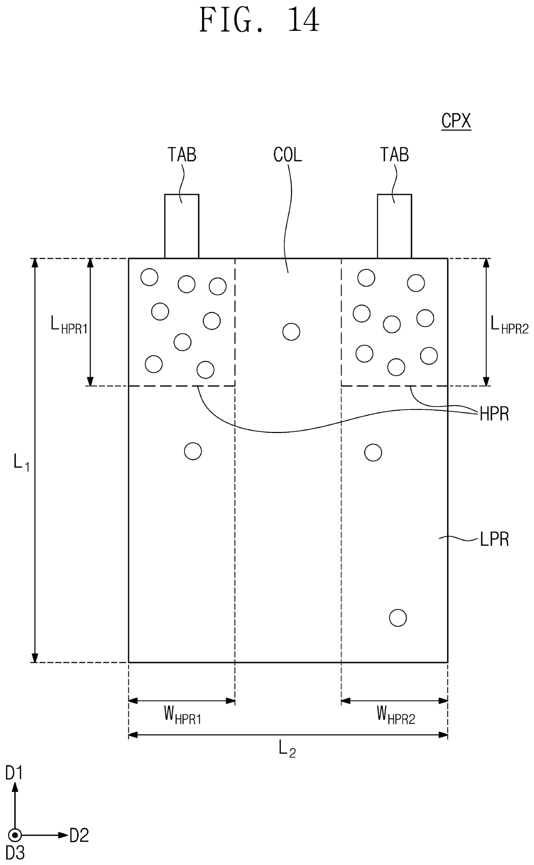

When the electrode composite CPX includes two electrode tabs TAB, the high-porous region HPR may be manufactured in two parts. For example, as illustrated in FIG. 14, the high-porous region HPR having high porosity is concentrated around the two electrode tabs TAB, the low-porous region LPR is disposed in the remaining part, and thus ionic conductivity and mechanical stability may be controlled more precisely.

The high-porous region HPR may be formed in a portion with high energy density within the current collector COL. The density of current may be inferred from temperature.

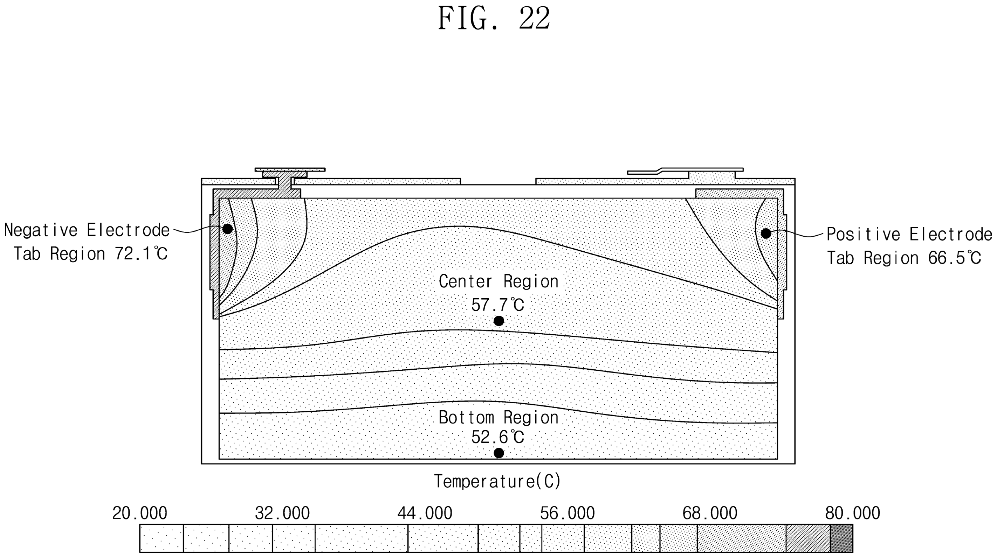

FIG. 22 illustrates a temperature distribution during general operation of the current collector COL. Referring to FIG. 22, it can be confirmed that the temperature is high near the electrode tab TAB, and it can be inferred that the current density is high. In the general current collector COL, the high-porous region HPR may be formed at a portion with high current density. The high-porous region HPR may be formed in a region in which a temperature is in a range of about 60 °C or more in the general current collector COL. The low-porous region LPR may be formed in a region in which a temperature is less than about 60 °C in the general current collector COL.

Ionic conductivity may be improved as a result of the formation of the high-porous region HPR in a region with the high current density (i.e., a region with a high temperature). The effects above can be confirmed in the mitigation of the temperature rise and/or in a higher diffusion limited current rate (DLC) value during battery operation.

In an example embodiment, a temperature of the high-porous region HPR of the electrode composite CPX according to the present disclosure may be lower than a temperature near the electrode tab TAB of the general current collector COL. For example, the temperature of the high-porous region HPR of the electrode composite CPX according to the present disclosure may be in a range of about 50 °C to about 70 °C, or about 60 °C to about 65 °C. The high-porous region HPR facilitates current flow, which may mitigate the temperature rise of the electrode composite CPX.

In an example embodiment, a diffusion limited current rate (DLC) value of the high-porous region HPR may be in a range of about 3.8 to about 5. A measurement method of the diffusion limited current rate (DLC) is described below in Evaluation Example 1.

## Rechargeable lithium battery

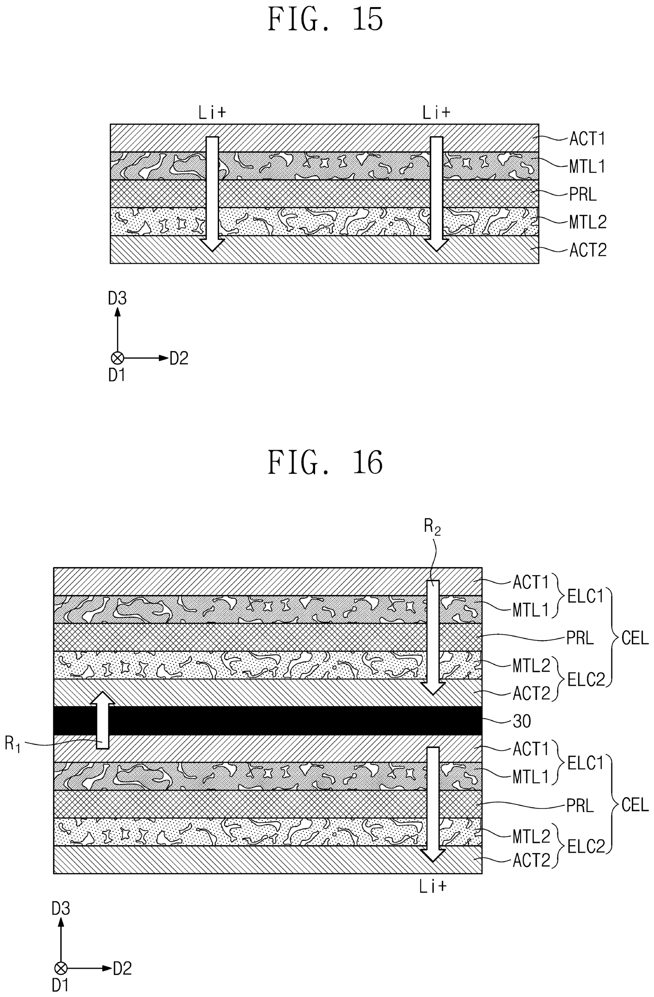

FIG. 15 is a schematic view illustrating a rechargeable lithium battery according to an example embodiment of the present disclosure. The rechargeable lithium battery according to an example embodiment of the present disclosure may include a first electrode ELC1, a second electrode ELC2, and a porous polymer layer PRL. The first electrode ELC1 may include a first metal layer MTL1, and a first active material layer ACT1 on the top surface of the first metal layer MTL1, or on a surface of the first metal layer MTL1 that is opposite the porous polymer layer PRL. The second electrode ELC2 may include a second metal layer MTL2, and a second active material layer ACT2 on the bottom surface of the second metal layer MTL2, or on a surface of the second metal layer MTL2 that is opposite the porous polymer layer PRL. The porous polymer layer PRL may be disposed between the first metal layer MTL1 and the second metal layer MTL2.

For convenience of explanation, FIG. 15 illustrates a case where the first active material layer ACT1 includes the above-described positive electrode active material layer AML1 (FIG. 1), and the second active material layer ACT2 includes the above-described negative electrode active material layer AML2 (FIG. 1). However, the first active material layer ACT1 and the second active material layer ACT2 are not limited thereto.

The first electrode ELC1, the second electrode ELC2, and the porous polymer layer PRL may constitute a unit cell CEL.

FIG. 16 illustrates stacked unit cells in FIG. 15. The rechargeable lithium battery according to an example embodiment of the present disclosure may further include an electrolyte ELL (FIG. 1). Detailed description for the electrolyte ELL (FIG. 1) is the same as described above.

According to an example embodiment of the present disclosure, at least one of the first metal layer MTL1 and the second metal layer MTL2 may include the above-described electrode composite CPX according to the present disclosure. According to another example embodiment of the present disclosure, the first metal layer MTL1 and the second metal layer MTL2 may include the above-described electrode composite CPX according to the present disclosure. Since the rechargeable lithium battery according to the present disclosure includes the electrode composite CPX, ionic conductivity of the battery may be improved, and temperature rise may be mitigated.

The porous polymer layer PRL may include at least one of polyolefin, polyester, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, a glass fiber, TEFLON, and polytetrafluoroethylene, or a combination thereof.

The porous polymer layer PRL may reduce or prevent the occurrence of a short circuit between the first metal layer MTL 1 and the second metal layer MTL2. The porous polymer layer PRL may constitute an insulator, and may be or include a component distinguished from a separator 30 to be described below. The porous polymer layer PRL may have a thickness in a third direction (D3 direction) smaller than a thickness of the separator 30 in a third direction (D3 direction). By reducing the thickness of the porous polymer layer PRL, the distance travelled by the lithium ions may be shortened, thereby improving the ionic conductivity efficiency between the first electrode ELC1 and the second electrode ELC2.

The first electrode ELC1, the porous polymer layer PRL, and the second electrode ELC2 may constitute a unit cell CEL. The rechargeable lithium battery according to an example embodiment of the present disclosure may further include a plurality of unit cells CEL stacked in a third direction (D3 direction) and a separator 30 disposed between the plurality of unit cells CEL.

The rechargeable lithium battery, according to an example embodiment of the present disclosure, may be a bipolar battery. The bipolar battery may include the positive electrode active material layer AML1 (FIG. 1) on one surface of the electrode composite CPX, and may include the negative electrode active material layer AML2 (FIG. 1) on the other surface of the electrode composite CPX. For example, the first active material layer ACT 1 may include the above-described positive electrode active material layer AML1 (FIG. 1), and the second active material layer ACT 2 may include the above-described negative electrode active material layer AML2 (FIG. 1).

The bipolar battery may have lithium ions move in both directions. Within the bipolar battery, lithium ions may move through a general pathway $R_1$ and a bipolar-type pathway $R_2$. This not only speeds up the conduction rate of lithium ions, but also diversifies their movement pathways, thereby reducing the accumulation of idle lithium.

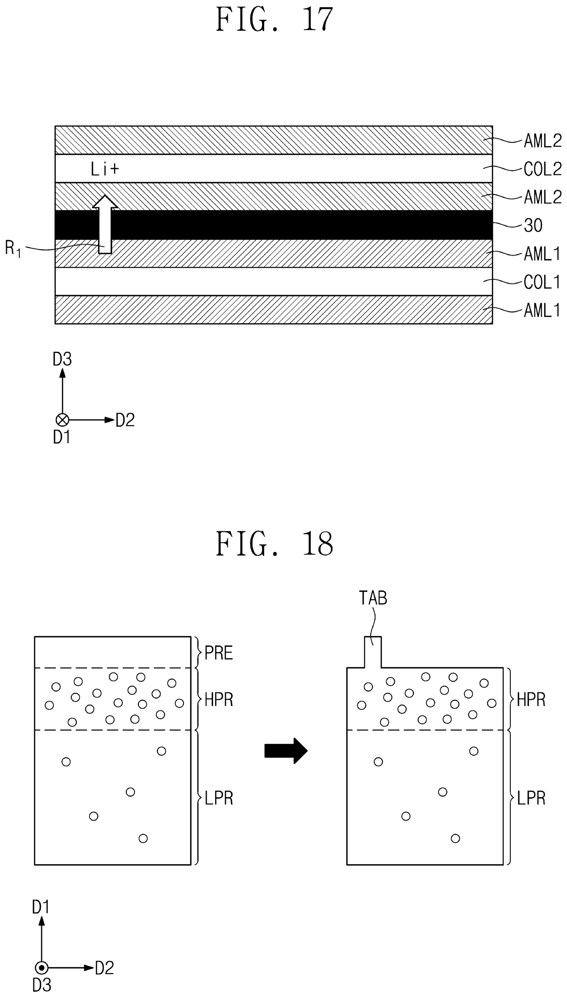

FIG. 17 shows a general rechargeable lithium battery that is not bipolar. The general rechargeable lithium battery may include a positive electrode active material layer having the same polarity on both the top and bottom surfaces of the current collector. That is, a positive electrode active material layer AML1 may be applied onto top and bottom surfaces of a positive electrode current collector COL1, and a negative electrode active material layer AML2 may be applied onto a top and a bottom surfaces of a negative electrode current collector COL2.

Lithium ions may move through one path $R_1$ in the general rechargeable lithium battery. Therefore, in addition to a slow conduction rate of lithium ions, poor communication may lead to accumulation of idle lithium on the positive electrode active material. Therefore, actual capacity may be reduced compared to theorical capacity.

The bipolar battery may have high ionic conductivity. Since lithium ions move relatively rapidly through bidirectional pathways $R_1$ and $R_2$, thereby reducing resistance within the electrode, the ionic conductivity may increase. Such structural characteristics may increase charge and discharge efficiency of the battery, which allows rapid charge and discharge. Therefore, the performance of the battery may be significantly improved.

The bipolar battery may implement a battery with high capacity and high voltage. Since the bipolar structure may have the same effect as multiple cells connected in series, high voltage may be obtained without external lines. Accordingly, the high capacity and voltage may be obtained while minimizing a volume of the battery, and thus the bipolar battery is appropriate for application in which high power and high energy density are required.

Improvements in ionic conductivity may be important for a bipolar battery due to high capacity and high voltage properties thereof. The battery with high capacity and high voltage often requires rapid charge, and thus improvements in ionic conductivity are necessary. In the electrode composite CPX according to the present disclosure, the high-porous region HPR and the low-porous region LPR are optimized or improved depending on the current density distribution, and when applied to the bipolar battery, the battery may exhibit significant improvements in battery performance.

Method for producing electrode composite

A producing method of the electrode composite CPX according to an example embodiment of the present disclosure may include forming the high-porous region HPR and the low-porous region LPR on a metal foil to manufacture a current collector COL; and electrically connecting the high-porous region HPR to the electrode TAB. The high-porous region HPR may be adjacent to the low-porous region LPR in the first direction (D1 direction). The electrode tab TAB may be adjacent to the high-porous region HPR in the first direction (D1 direction). The current collector COL may have a first length in the first direction (D1 direction). A height ($L_{HPR}$) of the high-porous region HPR in the first direction (D1 direction) may be in a range of about 30% to about 50% of the first length. The low-porous region LPR may be a remaining region other than the high-porous region HPR in the current collector COL. A porosity of the high-porous region HPR may be greater than a porosity of the low-porous region LPR.

The high-porous region HPR and the low-porous region LPR may be formed on the metal foil to manufacture the current collector COL. The metal foil may include at least one of copper, a copper alloy, aluminum, or an aluminum alloy, or a combination thereof. After forming the high-porous region LPR and the low-porous region LPR in the metal foil, and a pore may be formed such that a porosity thereof falls within a porosity range of each region.

The formation of a pore on the metal foil may be carried out using various methods without limitation. For example, a method such as, e.g., electrochemical etching, oxidation, laser processing, extrusion processing and stamping, and mechanical polishing may be used. The electrochemical etching may be immersing metal in an acidic or basic solution to corrode the surface. Oxidation involves applying an electric current to the metal foil to form a metal oxide layer on the surface, and a microscopic pore may be formed within a structure of the oxide layer. The laser processing may form a pore in the desired size and pattern on the surface of the metal foil using a laser. The extrusion processing and stamping may be a method of physically forming a pore by extruding or stamping the metal foil using a predesigned mold. The mechanical polishing may be a method of forming a pore by finely polishing the surface of the metal foil.

The high-porous region HPR may be electrically connected to the electrode tab TAB. The electrical connection may be performed by a method of stamping and/or welding.

FIG. 18 exemplifies a case where the high-porous region HPR is electrically connected to the electrode tab TAB by stamping. Referring to FIG. 18, when the stamping is planned, a pre-tab PRE may be left on the top of the metal foil. The pre-tab PRE may indicate a stage before the formation of the electrode tab TAB. The pre-tab PRE may be stamped to form the electrode tab TAB.

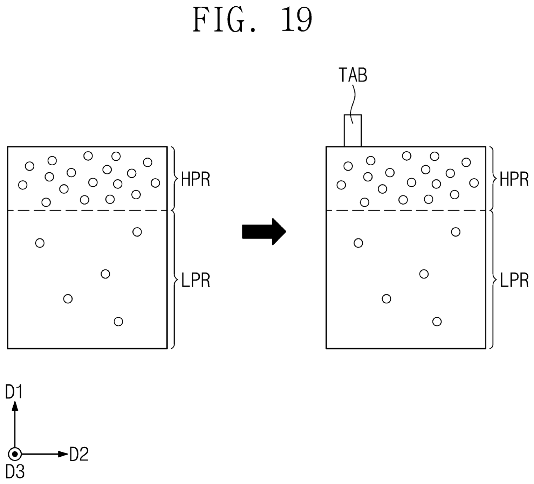

FIG. 19 exemplifies a case where the high-porous region HPR is electrically connected to the electrode tab TAB by welding. Referring to FIG. 19, the additionally manufactured electrode tab TAB may be welded to the high-porous region HPR.

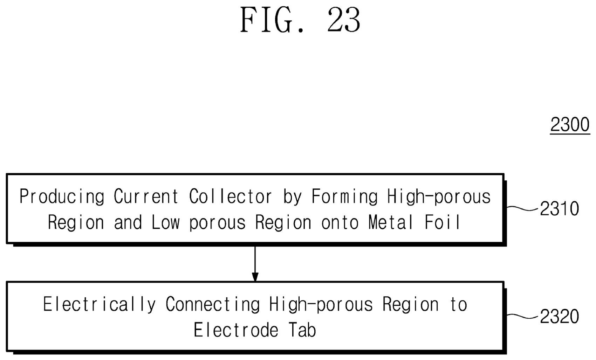

FIG. 23 is a flow chart illustrating a method of producing an electrode composite, according to various example embodiments. In examples, the method 2300 includes operation 2310, which includes producing a current collector by forming a high-porous region and a low-porous region onto a metal foil. For example, the high-porous region is adjacent to the low-porous region in the first direction, and the electrode tab is adjacent to the high-porous region in the first direction. In another example, the current collector has a first length in the first direction. In another example, a height of the high-porous region in the first direction is in a range of about 30% to about 50% of the first length. In a further example, the low-porous region is a remaining region other than the high-porous region in the current collector. In yet another example, a porosity of the high-porous region is greater than a porosity of the low-porous region.

Operation 2320 includes electrically connecting the high-porous region to the electrode tab. For example, electrically connecting the high-porous region and the electrode-tab includes welding the electrode tab to the high-porous region. In another example, electrically connecting the high-porous region and the electrode-tab includes stamping the metal foil.

Hereinafter, Examples and Comparative Examples according to the present disclosure are described. However, the following Examples are only provided as example embodiments, and an example embodiment of the present disclosure is not limited to the Examples below.

### Example 1

**Production of Electrode composite:**

An aluminum foil with a width of about 10 cm, a length of about 20 cm, and a thickness of about 20 $\mu$m was prepared. A high-porous region and a low porous region were set as shown in FIG. 6. In this case, the high-porous region had a width of about 10 cm, a length of about 8 cm, a thickness of about 20 $\mu$m. The low-porous region had a width of about 10 cm, a length of about 12 cm, a thickness of about 20 $\mu$m.

A pore was formed on the high-porous region as follows using an electrochemical etching method. 0.5 M of sulfuric acid ($H_2SO_4$) and 0.1 M of sodium chloride (NaCl) were mixed to prepare a solution. The aluminum foil as the positive electrode (+), and the platinum electrode, which will be used as the counter electrode, as the negative electrode (-), were connected. The prepared mixed solution of sulfuric acid and sodium chloride was used to fill a reaction cell, immersing the aluminum foil in the solution. The aluminum foil was placed in an electrolyte, and a reaction was proceeded for about 15 seconds at a current density of about 15 mA/cm$^2$. After the reaction, the metal foil was immediately rinsed with deionized water to remove the electrolyte and dried. A two-dimensional image was obtained using a digital microscope, and image analysis was performed using the Image J tool. It can be confirmed that a porosity of the high-porous region reached about 20%, which is a target value.

A pore was formed in the low-porous region using an oxidation method. A 3% aqueous solution of sulfuric acid ($H_2SO_4$) solution was prepared. An aluminum foil was put in the oxidation solution and an oxidation process was carried out at a current density of about 5 mA/cm$^2$ for about 5 seconds. After reaction, the metal foil was rinsed with deionized water to remove the oxidation solution and dried. A two-dimensional image was obtained using a digital microscope, and image analysis was performed using the Image J tool. It can be confirmed that a porosity of the low-porous region reached about 5%, which is a target value.

The electrode tab was welded to the high-porous region of the aluminum foil to produce the electrode composite for the positive electrode.

A copper foil with a width of about 10 cm, a length of about 20 cm was prepared, and a thickness of about 20 $\mu$m, and the high-porous region and the low-porous region were formed in the same manner as the aluminum foil.

The electrode tab was welded to the high-porous region of the copper foil to produce the electrode composite for the negative electrode.

**Producing Bipolar rechargeable lithium battery:**

A positive electrode active material layer was formed on a top surface of the electrode composite for the positive electrode to manufacture a first electrode. A negative electrode active material layer was formed on a bottom surface of the electrode composite for the negative electrode to manufacture a second electrode. A porous polymer layer was disposed between the electrode composite for the positive electrode and the electrode composite for the negative electrode to manufacture a bipolar rechargeable lithium battery.

The detailed producing method of the first electrode is as follows. As the positive electrode active material, LiCoO$_2$ (LCO) of 97 wt%, as the conductive material, artificial graphite powder of 0.5 wt%, carbon black (Ketjen black) of 0.8 wt%, acrylonitrile rubber of 0.2 wt%, and polyvinylidene fluoride (PVdF) of 1.5 wt% were mixed, put to N-methyl-2-pyrrolidone (NMP), and then stirred using a mechanical stirrer for about 30 minutes to produce a positive electrode active material slurry. The slurry was applied using a doctor blade in a thickness of about 60 $\mu$m, dried in a 100 °C hot air dryer for about 0.5 hours, then dried again for about 4 hours under vacuum conditions at about 120 °C, and roll pressed.

The detailed manufacturing method of the second electrode is as follows. As the negative electrode active material, a silicon-carbon composite of 98 wt%, styrene-butadiene rubber (SBR) of 1 wt% and carboxymethyl cellulose (CMC) of 1 wt% were mixed, then added to distilled water, stirred using a mechanical stirrer for about 60 minutes to manufacture a negative electrode active material slurry. The silicon-carbon composite used was a mixture in which graphite and silicon were mixed at a weight ratio of about 95.8: 4.2. The slurry was applied using a doctor blade in a thickness of about 60 $\mu$m, dried in a 100 °C hot air dryer for about 0.5 hours, then dried again for about 4 hours under vacuum conditions at about 120 °C, and roll pressed.

As a porous polymer layer, a polyethylene sheet of about 5 $\mu$m was used.

**Example 2**

A rechargeable lithium battery was manufactured in the same manner as in Example 1, with a difference that a porosity of the high-porous region was adjusted to about 30%.

**Example 3**

A rechargeable lithium battery was manufactured in the same manner as in Example 1, with a difference that a porosity of the high-porous region was adjusted to about 40%.

**Comparative Example 1**

A rechargeable lithium battery was manufactured in the same manner as in Example 1, with a difference that general aluminum foil and copper foil were used in place of the electrode composite according to the present disclosure.

**Comparative Example 2**

A rechargeable lithium battery was manufactured in the same manner as in Example 1, with a difference that a porosity of the high-porous region was adjusted to about 50%.

**Comparative Example 3**

A rechargeable lithium battery was manufactured in the same manner as in Example 1, with a difference that a porosity of the electrode composite was uniformly adjusted to about 40% throughout without distinguishing between the high-porous region and the low-porous region.

**Evaluation Example 1: DLC Evaluation**

The rechargeable lithium batteries in Examples and Comparative Examples were subject to a diffusion limited current rate (DLC) evaluation. Charge conditions were '25°C, 3 C, 4.53 V and 0.1 C Cut-off, and the discharge conditions were '25°C, 1 C, and 3.0 V cut-off. The DLC was calculated by Equation 2 below.

During rapid charge, since it is difficult to secure c-rate capability due to diffusion limitation, effective pathway of lithium ions within the electrode is important. Reducing transport length of lithium ions may significantly effect on improving c-rate capability. The higher the DLC value, the better the diffusion of lithium ions.

$$Equation\ 2:$$

$$DLC = \frac{2zFD\varepsilon^{\gamma}C^{0}_{Li^{+}}}{\omega\rho Q_{m}(1-\varepsilon)L^{2}}$$

*DLC unit: $A/cm^2 = C/(s*cm^2)$

$z$ : Valence of ions

F: Faraday constant [C/mol]

D: Diffusivity of ions [$cm^2/s$]

$\varepsilon$: Porosity of electrode

$\gamma$: Tortuosity factor

$C_{Li^+}^{0}$: Initial Li ion concentration in the electrolyte [$mol/cm^3$]

$\omega$: Mass fraction of active material

$\rho$: Apparent density of composite

$Q_m$: Gravimetric capacity of the active material [Ah/g]

L: Thickness of the electrode layer [$\mu$m]

According to the Equation of the diffusion limited current rate (DLC) above, as porosity increases, the DLC increase, which has an advantage in improving the c-rate capability, but the porosity is limited to about 40% considering rigidity of materials.

Table 1:

| | Porosity of high-porous region (%) | Porosity of low-porous region (%) | DLC ($C/(s*cm^2)$) |
|---|---|---|---|
| Example 1 | 20 | 5 | 3.8 |
| Example 2 | 30 | 5 | 4.3 |
| Example 3 | 40 | 5 | 5 |
| Comparative Example 1 | 0 | 0 | 3 |
| Comparative Example 2 | 50 | 5 | - |
| Comparative Example 3 | 40 | 40 | - |

Referring to Table 1, the battery according to Example of the present disclosure may exhibit desired or improved results on DLC evaluation, compared to the battery according to Comparative Example 1. Due to the high porosity, the polar plates in Comparative Examples 2 and 3 were damaged during evaluation, and no results could be obtained.

In conclusion, the rechargeable battery according to the present disclosure includes the electrode composite that balances ionic conductivity and mechanical stability, and thus a degradation rate of the battery may be slowed down through an optimal or improved design of porosity, which may contribute to an extended battery lifespan.

The electrode composite according to an example embodiment or the present disclosure may secure both ionic conductivity and mechanical stability by optimizing or improved the porosity depending on the current density distribution.

The rechargeable lithium battery according to examples of the present disclosure includes the electrode composite and applies the bipolar structure, and thus may have desired or improved ionic conductivity and mechanical stability. Therefore, the rechargeable lithium battery according to the present disclosure is advantageous for rapid charge, and may slow down deterioration rate of the battery.

**Claims**

1. An electrode composite comprising:

   a current collector including a high-porous region (HPR) and a low-porous region (LPR); and
   an electrode tab (70-72) electrically connected to the high-porous region (HPR),
   wherein the high-porous region (HPR) is adjacent to the low-porous region (LPR) in a first direction, and the electrode tab (70-72) is adjacent to the high-porous region (HPR) in the first direction,
   the current collector has a first length in the first direction,
   a height of the high-porous region (HPR) in the first direction is in a range of about 30% to about 50% of the first length,
   the low-porous region (LPR) is a remaining region other than the high-porous region (HPR) in the current collector, and
   a porosity of the high-porous region (HPR) is greater than a porosity of the low-porous region (LPR).

2. The electrode composite of claim 1, wherein the current collector has a second length in a second direction, and a width of the high-porous region (HPR) in the second direction is in a range of about 50% to about 100% of the second length.

3. The electrode composite of claim 1 or 2, wherein the porosity of the high-porous region (HPR) is in a range of about 20% to about 40%.

4. The electrode composite of any one of the preceding claims, wherein the porosity of the low-porous region (LPR) is in a range of about 0% to about 20%.

5. The electrode composite of any one of the preceding claims, wherein a temperature of the high-porous region (HPR) is in a range of about 50 °C to about 70 °C.

6. The electrode composite of any one of the preceding claims, wherein a DLC value of the high-porous region (HPR), according to Equation 2, is in a range of about 3.8 C/(s*cm$^2$) to about 5 C/(s*cm$^2$),

Equation 2:

$$DLC = \frac{2zFD\varepsilon^{\gamma}C^0_{Li^+}}{\omega\rho Q_m(1-\varepsilon)L^2}$$

wherein,

   z : Valence of ions;
   F: Faraday constant [C/mol];
   D: Diffusivity of ions [cm$^2$/s];
   $\varepsilon$: Porosity of the electrode (10, 20);
   $\gamma$: Tortuosity factor;
   $C_{Li+}^0$: Initial Li ion concentration in the electrolyte [mol/cm$^3$] ;
   $\omega$: Mass fraction of the active material;
   $\rho$: Apparent density of the composite [g/cm];
   $Q_m$: Gravimetric capacity of the active material [Ah/g]; and
   L: Thickness of the electrode layer [$\mu$m].

7. The electrode composite of any one of the preceding claims, wherein:

the high-porous region (HPR) comprises a pore, and
the average diameter of the pore is in a range of about 1 $\mu$m to about 300 $\mu$m.

8. A rechargeable lithium battery (100) comprising:

a first electrode including a first metal layer and a first active material layer on the top surface of the first metal layer;
a second electrode including a second metal layer and a second active material layer on the bottom surface of the second metal layer; and
a porous polymer layer between the first metal layer and the second metal layer,
wherein at least one of the first metal layer and the second metal layer comprises the electrode composite according to claim 1.

9. The rechargeable lithium battery (100) of claim 8, wherein the porous polymer layer comprises at least one of polyolefin, polyester, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, a glass fiber, TEFLON, and polytetrafluoroethylene, and a combination thereof.

10. The rechargeable lithium battery (100) of claim 8 or 9,

wherein the first metal layer comprises a first electrode composite that comprises the electrode composite, and
the second metal layer comprises a second electrode composite that comprises the electrode composite.

11. The rechargeable lithium battery (100) of any one of the claims 8 to 10, wherein the first active material layer comprises a positive electrode (10, 20) active material layer, and
the second active material layer comprises a negative electrode (10, 20) active material layer.

12. The rechargeable lithium battery (100) of any one of the claims 8 to 11, wherein the first electrode, the porous polymer layer, and the second electrode constitute a unit cell,
the rechargeable lithium battery (100) further comprises:

a plurality of the unit cells stacked in the third direction, and
a separator (30) disposed between the plurality of the unit cells.

13. The rechargeable lithium battery (100) of claim 12, wherein a thickness of the porous polymer layer in the third direction is smaller than a thickness of the separator (30) in the third direction.

14. The rechargeable lithium battery (100) of claim 12 or 13, further comprising an electrolyte.

15. A method (2300) of producing an electrode composite, the method (2300) comprising:

producing (2310) a current collector by forming a high-porous region (HPR) and a low-porous region (LPR) onto a metal foil; and
electrically connecting (2320) the high-porous region (HPR) to the electrode tab (70-72),
wherein the high-porous region (HPR) is adjacent to the low-porous region (LPR) in the first direction, and the electrode tab (70-72) is adjacent to the high-porous region (HPR) in the first direction,
the current collector has a first length in the first direction,
a height of the high-porous region (HPR) in the first direction is in a range of about 30% to about 50% of the first length,
the low-porous region (LPR) is a remaining region other than the high-porous region (HPR) in the current collector, and
a porosity of the high-porous region (HPR) is greater than a porosity of the low-porous region (LPR).

# FIG. 1

ELL

Li$^+$

COL1 AML1    30    COL2 AML2

10    20

# FIG. 2

# FIG. 3

# FIG. 4

100

50

72

40

71

10
30
20

# FIG. 5

# FIG. 6

# FIG. 7

# FIG. 8

CPX

TAB

COL

$L_{HPR}$

$L_1$

HPR

LPR

$W_{HPR}$

$L_2$

D1
D2
D3

# FIG. 9

CPX

HOL

D3
D2
D1

# FIG. 10

CPX

HOL

D3
D2
D1

FIG. 11

# FIG. 12A

# FIG. 12B

# FIG. 13A

C_rate(1)=10 Time=84s
Slice:Current Density in Electrolyte(Old cell)(A/m$^2$)

# FIG. 13B

C_rate(1)=10 Time=126s
Slice:Current Density in Electrolyte(Old cell)(A/m$^2$)

# FIG. 13C

C_rate(1)=10 Time=210s
Slice:Current Density in Electrolyte(Old cell)(A/m$^2$)

# FIG. 13D

C_rate(1)=10 Time=252s
Slice:Current Density in Electrolyte(Old cell)(A/m$^2$)

# FIG. 14

# FIG. 15

# FIG. 16

# FIG. 17

# FIG. 18

# FIG. 19

# FIG. 20

# FIG. 21

# FIG. 22

Negative Electrode
Tab Region 72.1℃

Positive Electrode
Tab Region 66.5℃

Center Region
57.7℃

Bottom Region
52.6℃

Temperature(C)

20.000    32.000    44.000    56.000    68.000    80.000

EP 4 746 060 A1

# FIG. 23

2300

| Producing Current Collector by Forming High-porous Region and Low porous Region onto Metal Foil |
|---|

2310

↓

| Electrically Connecting High-porous Region to Electrode Tab |
|---|

2320

Europäisches
Patentamt

European
Patent Office

Office européen
des brevets

# EUROPEAN SEARCH REPORT

**Application Number**

EP 25 21 5273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 579 822 A1 (SAMSUNG SDI CO LTD [KR]) 2 July 2025 (2025-07-02) | 1-11,15 | INV. H01M4/13 |
| A,P | * claim 15; figure 4; example 1 * * paragraphs [0078], [0079], [0132] * ----- | 12-14 | H01M4/139 H01M4/74 H01M10/052 |
| X | JP S58 71562 A (FURUKAWA BATTERY CO LTD) 28 April 1983 (1983-04-28) | 1-7,15 | H01M50/293 H01M50/414 |
| A | * figure 2 * * page 2, lines 4-15 * ----- | 8-14 | H01M4/80 |

**TECHNICAL FIELDS SEARCHED (IPC)**

H01M

The present search report has been drawn up for all claims

| Place of search | Date of completion of the search | Examiner |
|---|---|---|
| Munich | 30 March 2026 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 4 746 060 A1

## ANNEX TO THE EUROPEAN SEARCH REPORT
## ON EUROPEAN PATENT APPLICATION NO.

EP 25 21 5273

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2026

| Patent document cited in search report | | Publication date | Patent family member(s) | | Publication date |
|---|---|---|---|---|---|
| EP 4579822 | A1 | 02-07-2025 | CN | 120221802 A | 27-06-2025 |
| | | | EP | 4579822 A1 | 02-07-2025 |
| | | | KR | 20250101034 A | 04-07-2025 |
| JP S5871562 | A | 28-04-1983 | NONE | | |

EPO FORM P0459

For more details about this annex : see Official Journal of the European Patent Office, No. 12/82

42